# EUROPÄISCHE PATENTSCHRIFT

(11) **EP 2 061 134 B1**
(45) Veröffentlichungstag und Bekanntmachung des Hinweises auf die Patenterteilung: **02.01.2013**
(21) Anmeldenummer: 07120833.4
(22) Anmeldetag: 16.11.2007
(51) Int. Cl.: H02K 5/06, H02K 1/27

(54) **Rotor und Elektromotor mit einem solchen Rotor**
Rotor and electric motor with such a rotor
Rotor et moteur électrique avec un tel rotor

(43) Veröffentlichungstag der Anmeldung: 20.05.2009
(73) Patentinhaber: ebm-papst Mulfingen GmbH & Co. KG, 74673 Mulfingen (DE)
(72) Erfinder: Sturm, Gerhard, 74673 Mulfingen (DE); Streng, Gunter, 74575 Schrozberg (DE); Hirschlein, Ludwig, 74673 Mulfingen (DE); Brunner, Dieter, 74673 Mulfingen (DE)
(74) Vertreter: Patentanwälte Dr. Solf & Zapf

(56) Entgegenhaltungen:
- DE-A1- 4 039 571
- DE-A1-102004 026 453
- FR-A- 2 500 966
- GB-A- 911 310
- US-A- 3 206 628
- US-A- 4 130 770

## Beschreibung

Die Erfindung betrifft einen Rotor für einen elektrischen Motor, insbesondere für einen Außenläufermotor, mit einem Grundkörper, der eine Umfangswandung mit zylindrischer Grundgestalt und eine mit der Umfangswandung verbundene stimseitige Deckwandung aufweist, und mit einer Rotorwelle, die zentrisch mit der Deckwandung einstückig verbunden ist und mit einem Wellenschaft axial in einen von der Umfangswandung umgebenden Rotorraum ragt. Des Weiteren betrifft die Erfindung einen Elektromotor mit einem solchen Rotor.

Ein Rotor ähnlicher Art ist aus der FR-A-2 500 966 bekannt. Dieses Dokument beschreibt einen Rotor, an den ein Lüfterrad montierbar ist, wobei der glockenförmig ausgeführte Rotor als Außenläufer an einem Elektromotor ausgebildet ist und einen als Gussteil ausführbaren Rotorkörper aufweist, der über eine Wellenbuchse mit einer Rotorwelle verbunden ist. In die Wellenbuchse wird ein Ende der Rotorwelle insbesondere eingepresst. Die Wellenbuchse kann dabei bevorzugt aus Stahl bestehen, wie auch bekannte Rotorwellen in der Regel aus Stahl gefertigt sind. Außerdem sind auch technische Lösungen bekannt, wonach eine Stahlwelle direkt in einen Rotor eingegossen oder wonach in einen gegossenen Rotor eine Stahhwelle eingesetzt und durch ein Befestigungsmittel gesichert wird.

Aus der DE 10 2004 026 453 A1 ist eine elektrische Maschine bekannt, die einen als Primärteil bezeichneten Stator und einen relativ dazu bewegbaren, als Sekundärteil bezeichneten Rotor aufweist Das Primärteil hat einen weichmagnetischen Kem mit Nuten und eine Einzelpolwicklung, die eine Anzahl von in den Nuten angeordneten Wicklungsspulen aufweist, die mit ihren Wickelköpfen an den Stirnseiten des Kerns aus den Nuten herausragen. In Bewegungsrichtung der elektrischen Maschine zueinander benachbart nebeneinander angeordnete Wickelköpfe sind durch Zwischenräume voneinander beabstandet Das Sekundärteil weist eine Folge von in Bewegungsrichtung zueinander versetzten Permanentmagneten auf, die mit dem Primärteil magnetisch zusammenwirken, wobei an wenigstens einer Stirnseite des Kerns zur Bildung einer Wärmebrücke ein vorgefertigter, gut wärmeleitender Wickelkopfkörper angeordnet ist, der den Wickelköpfen zugewandte Aufnahmen hat, in welche die Wickelköpfe zumindest bereichsweise hineinragen. Dabei greifen zwischen den Aufnahmen befindliche Bereiche des Wickelkopfkörpers in die Zwischenräume zwischen den Wickelköpfen ein. In der DE 10 2004 026 453 A1 sind verschiedene Ausführungsformen der elektrischen Maschine beschrieben. In einer Ausbildung ist diese elektrische Maschine als Innenläufer ausgebildet Insofern diese Ausführung aber keine Deckwandung aufweist, ist diese Ausführung nicht als gattungsgemäß anzusehen. In einer weiteren Ausführungsform als Außenläufermotor ist das Sekundärteil topfförmig ausgebildet, wobei an einer inneren Mantelfläche die Permanentmagnete angeordnet sind. Ein Achsabschnitt eines Haltekörpers ist für die Lagerung einer das Sekundärteil tragenden Welle als dünnwandiges Rohr ausgebildet Die Welle selbst ist jedoch ein Vollkörper, die - wie aus der das Ausführungsbeispiel veranschaulichenden Zeichnung entnommen werden kann - einstückig mit dem Sekundärteil ausgebildet ist. Insofern handelt es sich bei dieser Ausführung um einen Rotor der eingangs beschriebenen Art für einen elektrischen Motor.

Der Erfindung liegt die Aufgabe zu Grunde, einen Rotor der eingangs beschriebenen, gattungsgemäßen Art und einen Elektromotor mit einem solchen Rotor zu schaffen, der bei stabiler Bauweise mit verringertem Fertigungsaufwand herstellbar ist.

Diese Aufgabe wird erfindungsgemäß dadurch gelöst, dass der Grundkörper und die Rotorwelle aus einer Aluminiumlegierung gefertigt sind, wobei die Rotorwelle zumindest teilweise in einem von der Deckwandung ausgehenden Bereich als Hohlwelle ausgebildet ist.

Die Herstellung des erfindungsgemäßen Rotors ist fertigungstechnisch einfach, indem der erfindungsgemäße Rotor als Gussteil gefertigt werden kann. Hierzu kann eine Aluminiumdruckgusslegierung eingesetzt werden. Die bei den bekannten Rotoren notwendigen Arbeitsschritte, wie Einpressen, Richten und gegebenenfalls eine zusätzliche Befestigung der Welle, können dabei entfallen. Außerdem reduziert sich der Materialaufwand, weil keine Buchse zur Aufnahme der Rotorwelle vorgesehen werden muss. Ein weiterer Vorteil besteht in einer Gewichtsreduzierung des erfindungsgemäßen Bauteils und eines damit ausgestatteten erfindungsgemäßen Elektromotors, da der Aluminiumwerkstoff eine geringere Dichte aufweist als eine Stahlwelle und durch die Hohlform zusätzlich Material eingespart werden kann.

Die Hohlform gewährleistet andererseits jedoch auch, dass ein hohes Flächenträgheitsmoment des erfindungsgemäßen Bauteils eingestellt werden kann, was im Hinblick auf eine Biege- und Torsionsbelastung der Welle von Bedeutung ist. Das Flächenträgheitsmoment ist zusammen mit dem Elastizitäts- bzw. - im Fall der Torsion - dem Schubmodul ein Maß für die Steifigkeit eines ebenen Querschnitts im Hinblick auf die genannten Belastungsfälle. Auf diese Weise kann die bekannte Stahlwelle ersetzt werden, ohne dass die Festigkeit bzw. Stabilität des erfindungsgemäßen Rotors dadurch beeinträchtigt würden und ohne dass dazu eine Vergrößerung der geometrischen Abmaße notwendig wäre, was die entsprechend üblicher Anwendungsfälle erforderlichen Einbauverhältnisse verändern würde.

Der Einsatz von Aluminium als Material für den erfindungsgemäßen Rotor ist schließlich auch unter dem Gesichtspunkt eines geräuscharmen Laufs in einem Elektromotor und einer im Vergleich zu Stahl erhöhten Wärmeableitung vorteilhaft.

Weitere vorteilhafte Ausführungen der Erfindung sind in den Unteransprüchen und der nachfolgenden Beschreibung enthalten. Anhand eines in den beiliegenden Zeichnungsfiguren dargestellten Ausführungsbeispiels wird die Erfindung näher erläutert. Es zeigen:
- Fig. 1: einen Längsschnitt durch einen erfindungsgemäßen Elektromotor mit einem erfindungsgemäßen Rotor,
- Fig.2: einen weiteren Längsschnitt durch einen erfindungsgemäßen Elektromotor mit einem erfindungsgemäßen Rotor, jedoch in einer anderen Schnittebene,
- Fig. 3: in perspektivischer Darstellung, einen erfindungsgemäßen Rotor, in einer Ansicht auf seine Deckwandung,
- Fig. 4: in perspektivischer Darstellung, einen erfindungsgemäßen Rotor, in einer Ansicht in seinen Rotorraum.

In den Figuren der Zeichnung sind gleiche Teile auch jeweils stets mit den gleichen Bezugszeichen versehen, so dass sie in der Regel auch jeweils nur einmal beschrieben werden.

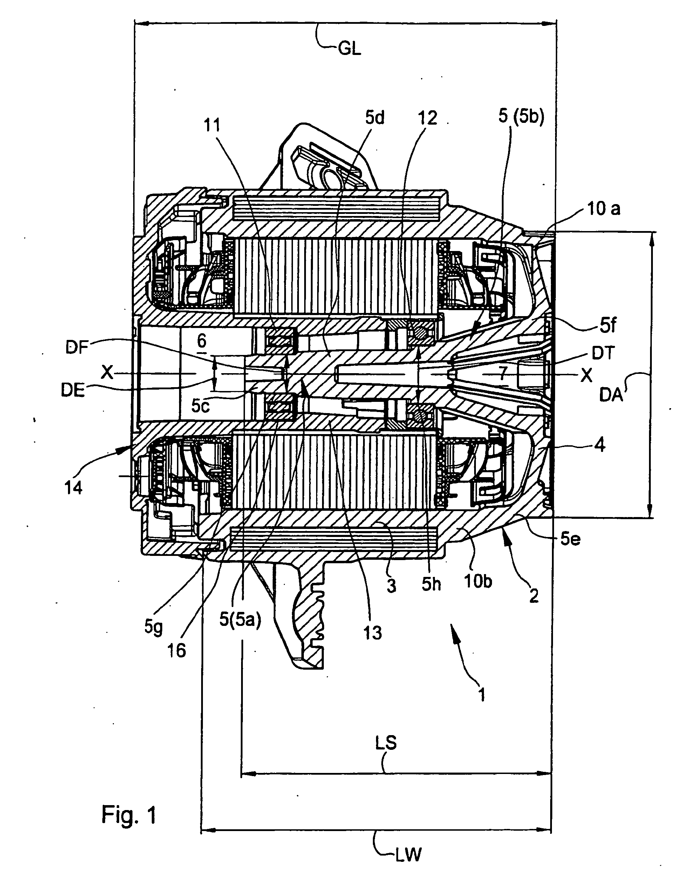

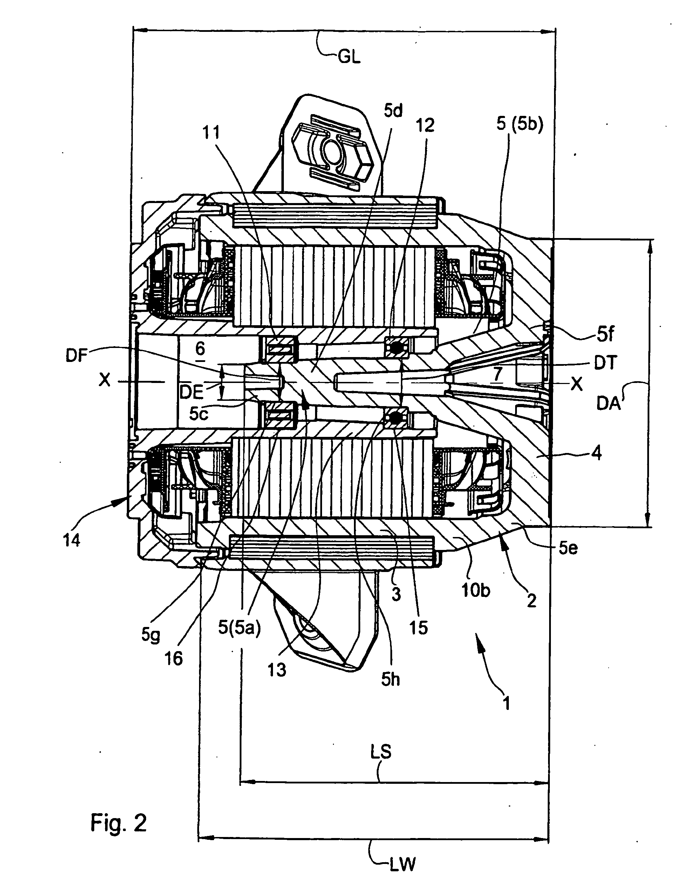

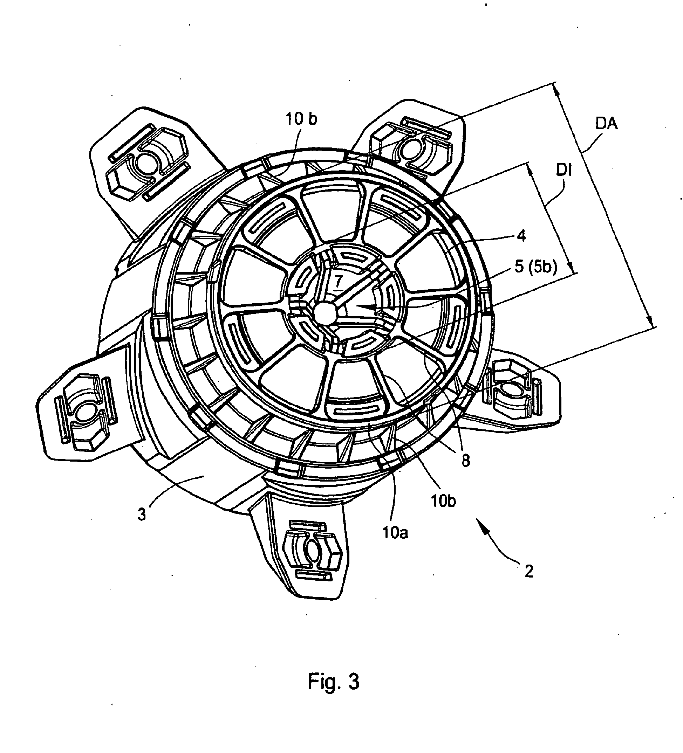

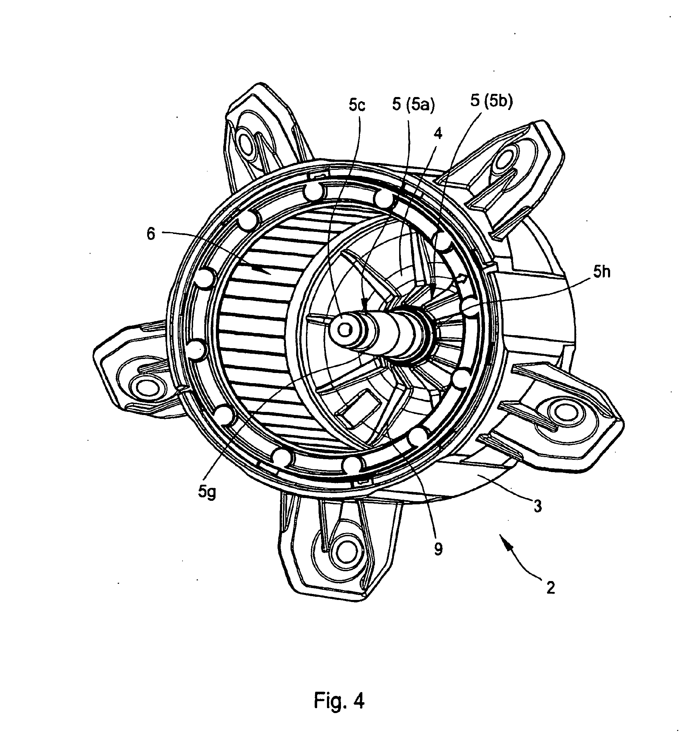

Wie zunächst die Schnittdarstellungen in Fig. 1 und 2, aber auch die perspektivischen Darstellungen in Fig. 3 und 4 übereinstimmend zeigen, umfasst ein erfindungsgemäßer Rotor eines Elektromotors 1, wie des in Fig. 1 und 2 dargestellten Außenläufer-Motors, einen Grundkörper 2, der eine Umfangswandung 3 mit zylindrischer Grundgestalt und eine mit der Umfangswandung 3 verbundene stirnseitige Deckwandung 4 aufweist. Des Weiteren umfasst der Rotor eine Rotorwelle 5, die zentrisch mit der Deckwandung 4 verbunden ist und mit einem Wellenschaft 5a axial (Längsachse X-X in Fig. 1 und 2) in einen von der Umfangswandung 3 umgebenen Rotorraum 6 ragt.

Erfindungsgemäß ist vorgesehen, dass der Grundkörper 2 und die Rotorwelle 5 einstückig aus einer Aluminiumlegierung gefertigt sind, wobei die Rotorwelle 5 zumindest teilweise in einem von der Deckwandung 4 ausgehenden Bereich als Hohlwelle ausgebildet ist. Dieser Bereich ist in der Zeichnung mit dem Bezugszeichen 5b bezeichnet.

Ein Innenraum 7 der zumindest teilweise als Hohlwelle ausgebildeten Rotorwelle 5 verjüngt sich dabei von der Deckwandung 4 ausgehend in axialer Richtung X-X konisch oder trichterartig. Der obere Durchmesser DI des trichterförmigen Innenraums 7 kann dabei mit Vorteil - wie in Fig. 3 explizit dargestellt - etwa die Hälfte des Durchmessers DA der Deckwandung 4 betragen. Durch die trichterförmige Ausbildung werden Materialanhäufungen vermieden, wobei dieser Innenraum 7 beim Gießen in einfacher Weise durch einen mit komplementärer Form ausgebildeten Stempel im Gusswerkzeug hergestellt werden kann. Ebenso kann in analoger Weise - wie dargestellt - bei etwa gleichbleibender Wandstärke auch vorgesehen sein, dass sich die Außenkontur der Rotorwelle 5 von der Deckwandung 4 ausgehend zumindest bereichsweise, insbesondere konisch, trichterartig oder - im Falle der Lagersitze - auch sprunghaft, in axialer Richtung X-X verjüngt, wobei auf Letzteres im Detail noch näher eingegangen werden wird.

In der dargestellten Ausführung ist - wie insbesondere Fig. 1 und 2 veranschaulichen - der Wellenschaft 5a nicht nur im Bereich der Deckwandung 4, sondern auch an seinem axial gegenüber liegenden freien Ende 5c als Hohlkörper ausgebildet, während er in einem Teilbereich 5d stabilitätserhöhend abschnittsweise als Vollkörper ausgebildet ist.

Die Umfangswandung 3 und die Deckwandung 4 sind - wie dies Fig. 1 und 2 zu entnehmen ist - im Längsschnitt gesehen über einen in der Grundgestalt verrundeten konvex gekrümmten, insbesondere - wie dargestellt - hyperbolisch, parabolisch, elliptisch oder kreisringartig gekrümmten, äußeren Wandübergangsabschnitt 5e miteinander verbunden. Ebenso sind auch die Deckwandung 4 und der Wellenschaft 5a im Längsschnitt gesehen über einen in der Grundgestalt verrundeten konvex gekrümmten, insbesondere - wie gezeigt - hyperbolisch, parabolisch, elliptisch oder kreisringartig gekrümmten, inneren Wandübergangsabschnitt 5f miteinander verbunden. Durch diese materialoptimierte Form und auch Wandstärke wird - im Zusammenwirken mit dem trichterförmigen Innenraum 7 eine optimale Verteilung der im Rotor auftretenden mechanischen Spannungen erreicht. Unter den verschiedenen, beispielsweise bei Betrieb des erfindungsgemäßen Rotors auftretenden Belastungsfällen kann so das Auftreten von mechanischen Spannungsspitzen, die beispielsweise unter Dauerbelastung einen Bruch herbeiführen könnten, sicher vermieden werden.

Zusätzliche stabilitätserhöhende Merkmale des Rotors bestehen darin, dass auf der Oberseite und/oder der Unterseite der Deckwandung 4 speichenartig radial nach außen weisende Verstärkungsrippen angeordnet sind. Die Verstärkungsrippen auf der Oberseite der Deckwandung 4 sind in Fig. 3 mit dem Bezugszeichen 8 und die Verstärkungsrippen im Rotorraum 6 auf der Unterseite der Deckwandung 4 in Fig. 4 mit dem Bezugszeichen 9 bezeichnet. Insbesondere Fig. 1 und 3 zeigen auch, dass in einem Randbereich der Deckwandung 4 ein die Stabilität bzw. Formsteifigkeit erhöhender umfangsgemäß verlaufender in axialer Richtung X-X abragender Ringsteg 10a angeordnet ist. Des Weiteren ist vorgesehen, dass in einem Randbereich der Deckwandung 4 radial schräg auf die Umfangswandung 3 zulaufende und die Umfangswandung 3 mit der Deckwandung 4 verbindende Versteifungsrippen 10b angeordnet sind. Diese Rippen weisen in der dargestellten Ausführung eine etwa dreieckige Form auf.

Der Rotor weist auf seinem Wellenschaft 5a in der Nähe seines freien Endes einen Lagersitz 5g für ein Führungslager 11 auf. Der Lagersitz 5g ist als Bereich mit sprunghaft verringertem Durchmesser gebildet, der in axialer Richtung X-X auf die Deckwandung 4 hin einen Anschlag für das Führungslager 11 bildet.

Des Weiteren weist der Rotor auf seinem Wellenschaft 5a in einem mittleren Bereich einen Lagersitz 5h für ein Traglager 12 auf. Auch dieser Lagersitz 5h ist als Bereich mit sprunghaft verringertem Durchmesser gebildet, der in axialer Richtung X-X auf die Deckwandung 4 hin einen Anschlag für das Traglager 12 bildet.

Der Wellenschaft 5a weist somit im Bereich des Lagersitzes 5h für das stärker belastete Traglager 12 einen größeren Durchmesser DT auf als es der Durchmesser DF im Bereich des Lagersitzes 5g für das Führungslager 11 ist. Diese Ausbildung impliziert eine Vergrößerung des Traglagers 12 und eine Verkleinerung des Führungslagers 11 gegenüber dem eingangs erwähnten bekannten Rotor mit Stahlwelle, bei dem beide Lagerbereiche gleich groß sind.

In dem exemplarisch dargestellten Elektromotor 1 ist der Rotor in einem Lagertragrohr 13 des Stators 14 gelagert. In dem Lagertragrohr 13 ist ein Lagersitz 15 für das Traglager 12 (Fig. 2) und ein Lagersitz 16 für das Führungslager 11 (Fig. 1 und 2) ausgebildet, wobei das Lagertragrohr 13 im Bereich des Lagersitzes 15 für das Traglager 12 einen größeren (nicht näher bezeichneten) Innendurchmesser aufweist als im Bereich des Lagersitzes 16 für das Führungslager 11.

Rotorgrundkörper 2 und Stator 14 sind dabei gewissermaßen aneinander bzw. ineinander gesteckt, wobei das Lagertragrohr 13 des Stators 14 den Wellenschaft 5a des Rotors umgreift und die Umfangswandung 3 des Rotors wiederum den Stator 14 umgibt. Hierbei ist vorgesehen, dass eine axiale Länge LS des Wellenschaftes 5a geringer ist als eine axiale Länge LW der Umfangswandung 3. Die Länge LS des Wellenschaftes 5a kann etwa 75 bis 90 Prozent der axialen Länge LW der Umfangswandung 3 betragen. Der Durchmesser DE des Wellenschaftes 5a beträgt an seinem freien Ende 5c etwa nur noch ein Viertel bis ein Drittel des (maximalen) Trichterdurchmessers des Innenraumes 7 der Rotorwelle 5 im Bereich der Deckwandung 4 des Rotorgrundkörpers 2.

Die Lager 11, 12 sind unter dem Aspekt einer optimierten Aufnahme der mechanischen Lasten derart angeordnet, dass die Positionen der Lager 11, 12 eine Gesamtlänge GL des erfindungsgemäßen Elektromotors 1 etwa dritteln, wobei der oben erwähnte trichterförmige Bereich mit dem zentrisch ausgesparten Innenraum 7 sich über das erste Drittel der Gesamtlänge GL des Motors - von der Deckwandung 4 ausgehend bis zum Traglager 12 erstreckt.

Entsprechend einer vorgesehenen Verwendung des erfindungsgemäßen Elektromotors 1 als Lüfter weist dieser außenseitig Lüfterflügel auf. In fertigungstechnisch optimaler Weise sind Ansätze für diese Lüfterflügel an der Umfangswandung 3 des Rotors außenseitig einstückig angeformt. Die Lüfterflügel können an der Umfangswandung 3 einstückig angeformt, aufgeschraubt oder aufgepresst sein.

### Bezugszeichen

- 1: Elektromotor
- 2: Rotorgrundkörper
- 3: Umfangswandung von 2
- 4: Deckwandung von 2
- 5: Rotorwelle von 2
- 5a: Wellenschaft von 5
- 5b: Hohlwellenbereich von 5
- 5c: freies Ende von 5
- 5d: Vollkörperbereich von 5
- 5e: Wandübergangsabschnitt 3/4 von 2
- 5f: Wandübergangsabschnitt 4/5a von 2
- 5g: Lagersitz für 11 auf 5
- 5h: Lagersitz für 12 auf 5
- 6: Rotorraum umgeben von 3
- 7: Innenraum von 5b
- 8: Verstärkungsrippen oberseitig von 4
- 9: Verstärkungsrippen unterseitig von 4
- 10a: Ringsteg auf 4
- 10b: Versteifungsrippen 3/4
- 11: Führungslager
- 12: Traglager
- 13: Lagertragrohr von 14
- 14: Stator von 1
- 15: Lagersitz von 12 in 13
- 16: Lagersitz von 11 in 13
- DA: Außendurchmesser von 4
- DF: Durchmesser von 5g
- DE: Durchmesser von 5a im Bereich von 5c
- DI: oberer Durchmesser von 7
- DT: Durchmesser von 5h
- LS: axiale Länge von 5a
- LW: axiale Länge von 3
- LG: axiale Gesamtlänge von 1
- X-X: Längsachse von 1/2

## Patentansprüche

1. Rotor für einen Elektromotor (1), insbesondere für einen Außenläufermotor, mit einem Grundkörper (2), der eine Umfangswandung (3) mit zylindrischer Grundgestalt und eine mit der Umfangswandung (3) verbundene stirnseitige Deckwandung (4) aufweist, und mit einer Rotorwelle (5), die zentrisch mit der Deckwandung (4) einstückig verbunden ist und mit einem Wellenschaft (5a) axial in einen von der Umfangswandung (3) umgebenen Rotorraum (6) ragt, **dadurch gekennzeichnet**, dassderGrundkörper(2)unddie Rotorwelle (5) aus einer Aluminiumlegierung gefertigt sind, wobei die Rotorwelle (5) zumindest teilweise in einem von der Deckwandung (4) ausgehenden Bereich als Hohlwelle ausgebildet ist.

2. Rotor nach Anspruch 1,
**dadurch gekennzeichnet, dass** ein Innenraum (7) der zumindest teilweise als Hohlwelle ausgebildeten Rotorwelle (5) sich von der Deckwandung (4) ausgehend in axialer Richtung (X-X) konisch oder trichterartig verjüngt.

3. Rotor nach Anspruch 1 oder 2,
**dadurch gekennzeichnet, dass** sich die Außenkontur der Rotorwelle (5) von der Deckwandung (4) ausgehend zumindest bereichsweise, insbesondere konisch, trichterartig oder sprunghaft, in axialer Richtung (X-X) verjüngt.

4. Rotor nach einem der Ansprüche 1 bis 3,
**dadurch gekennzeichnet, dass** der Wellenschaft (5a) abschnittsweise (5d) als Vollkörper ausgebildet ist.

5. Rotor nach einem der Ansprüche 1 bis 4,
**dadurch gekennzeichnet, dass** der Wellenschaft (5a) an seinem freien Ende (5c) als Hohlkörper ausgebildet ist.

6. Rotor nach einem der Ansprüche 1 bis 5,
**dadurch gekennzeichnet, dass** an der Umfangswandung (3) außenseitig Lüfterflügel angeordnet, insbesondere einstückig angeformt, sind.

7. Rotor nach einem der Ansprüche 1 bis 6,
**dadurch gekennzeichnet, dass** die Umfangswandung (3) und die Deckwandung (4) im Längsschnitt gesehen über einen in der Grundgestalt verrundeten konvex gekrümmten, insbesondere hyperbolisch, parabolisch, elliptisch oder kreisringartig gekrümmten, äußeren Wandübergangsabschnitt (5e) miteinander verbunden sind.

8. Rotor nach einem der Ansprüche 1 bis 7,
**dadurch gekennzeichnet, dass** die Deckwandung (4) und der Wellenschaft (5a) im Längsschnitt gesehen über einen in der Grundgestalt verrundeten konvex gekrümmten, insbesondere hyperbolisch, parabolisch, elliptisch oder kreisringartig gekrümmten, inneren Wandübergangsabschnitt (5f) miteinander verbunden sind.

9. Rotor nach einem der Ansprüche 1 bis 8,
**dadurch gekennzeichnet, dass** eine axiale Länge (LS) des Wellenschaftes (5a) geringer ist als eine axiale Länge (LW) der Umfangswandung (3).

10. Rotor nach einem der Ansprüche 1 bis 9,
**dadurch gekennzeichnet, dass** auf der Oberseite und/oder der Unterseite der Deckwandung (4) speichenartig radial nach außen weisende Verstärkungsrippen (8, 9) angeordnet sind.

11. Rotor nach einem der Ansprüche 1 bis 10,
**dadurch gekennzeichnet, dass** in einem Randbereich der Deckwandung (4) ein umfangsgemäß verlaufender axial (X-X) abragender Ringsteg (10a) angeordnet ist.

12. Rotor nach einem der Ansprüche 1 bis 11,
**dadurch gekennzeichnet, dass** in einem Randbereich der Deckwandung (4) radial schräg auf die Umfangswandung (3) zulaufende und die Umfangswandung (3) mit der Deckwandung (4) verbindende Versteifungsrippen (10b) angeordnet sind.

13. Rotor nach einem der Ansprüche 1 bis 12,
**dadurch gekennzeichnet, dass** der Wellenschaft (5a) in der Nähe seines freien Endes (5c) einen Lagersitz (5g) für ein Führungslager (11) aufweist.

14. Rotor nach einem der Ansprüche 1 bis 13,
**dadurch gekennzeichnet, dass** der Wellenschaft (5a) in einem mittleren Bereich einen Lagersitz (5h) für ein Traglager (12) aufweist.

15. Rotor nach den Ansprüchen 13 und 14,
**dadurch gekennzeichnet**, dassderWellenschaft(5a)im Bereich des Lagersitzes (5h) für das Traglager (12) einen größeren Durchmesser (DT) aufweist als der Durchmesser (DF) im Bereich des Lagersitzes (5g) für das Führungslager (11).

16. Elektromotor (1), insbesondere Außenläufermotor, mit einem Stator (14) und mit einem Rotor,
**gekennzeichnet durch** einen Rotor nach einem der Ansprüche 1 bis 15.

17. Elektromotor nach Anspruch 16,
**dadurch gekennzeichnet, dass** der Rotor innerhalb des Stators (14) mit seinem Wellenschaft (5a) über ein/das stärker belastete(s) Traglager (12) und ein/das weniger stark belastete(s) Führungslager (11) gelagert ist.

18. Elektromotor nach Anspruch 16 oder 17,
**dadurch gekennzeichnet, dass** der Rotor in einem Lagertragrohr (13) des Stators (14) gelagert ist, in dem ein Lagersitz (15) für das Traglager (12) und ein Lagersitz (16) für das Führungslager (11) ausgebildet ist, wobei das Lagertragrohr (13) im Bereich des Lagersitzes (15) für das Traglager (12) einen größeren Innendurchmesser aufweist als im Bereich des Lagersitzes (16) für das Führungslager (11).

## Claims

1. Rotor for an electric motor (1), in particular for an external rotor motor, with a base body (2), which has a peripheral wall (3) of cylindrical basic shape and an end-side covering wall (4) connected to the peripheral wall (3), and with a rotor shaft (5), which is centrally connected in one piece to the covering wall (4) and projects with a shaft shank (5a) axially into a rotor space (6) surrounded by the peripheral wall (3),
**characterised in that** the base body (2) and the rotor shaft (5) are produced from an aluminium alloy, the rotor shaft (5) being formed at least partly as a hollow shaft in a region starting from the covering wall (4).

2. Rotor according to Claim 1,
**characterised in that** an interior space (7) of the rotor shaft (5) formed at least partly as a hollow shaft tapers conically or in the manner of a funnel in the axial direction (X-X) starting from the covering wall (4).

3. Rotor according to Claim 1 or 2,
**characterised in that** the outer contour of the rotor shaft (5) tapers, in particular conically, in the manner of a funnel or in steps, at least regionally in the axial direction (X-X) starting from the covering wall (4).

4. Rotor according to one of Claims 1 to 3,
**characterised in that** the shaft shank (5a) is formed sectionally (5d) as a solid body.

5. Rotor according to one of Claims 1 to 4,
**characterised in that** the shaft shank (5a) is formed as a hollow body at its free end (5c).

6. Rotor according to one of Claims 1 to 5,
**characterised in that** fan blades are arranged, in particular formed on in one piece, on the outside of the peripheral wall (3).

7. Rotor according to one of Claims 1 to 6,
**characterised in that** the peripheral wall (3) and the covering wall (4) are connected to one another via an outer wall transition section (5e) of rounded convexly curved, in particular hyperbolically, parabolically, elliptically or annularly curved, basic shape, seen in longitudinal section.

8. Rotor according to one of Claims 1 to 7,
**characterised in that** the covering wall (4) and the shaft shank (5a) are connected to one another via an inner wall transition section (5f) of rounded convexly curved, in particular hyperbolically, parabolically, elliptically or annularly curved, basic shape, seen in longitudinal section.

9. Rotor according to one of Claims 1 to 8,
**characterised in that** an axial length (LS) of the shaft shank (5a) is less than an axial length (LW) of the peripheral wall (3).

10. Rotor according to one of Claims 1 to 9,
**characterised in that** reinforcing ribs (8, 9) pointing radially outwards in the manner of spokes are arranged on the upper side and/or the lower side of the covering wall (4).

11. Rotor according to one of Claims 1 to 10,
**characterised in that** a peripherally running, axially (X-X) projecting annular web (10a) is arranged in an edge region of the covering wall (4).

12. Rotor according to one of Claims 1 to 11,
**characterised in that** stiffening ribs (10b) running radially obliquely towards the peripheral wall (3) and connecting the peripheral wall (3) to the covering wall (4) are arranged in an edge region of the covering wall (4).

13. Rotor according to one of Claims 1 to 12,
**characterised in that** the shaft shank (5a) has a bearing seat (5g) for a guide bearing (11) in the vicinity of its free end (5c).

14. Rotor according to one of Claims 1 to 13,
**characterised in that** the shaft shank (5a) has a bearing seat (5h) for a supporting bearing (12) in a central region.

15. Rotor according to Claims 13 and 14,
**characterised in that** the shaft shank (5a) has a greater diameter (DT) in the region of the bearing seat (5h) for the supporting bearing (12) than the diameter (DF) in the region of the bearing seat (5g) for the guide bearing (11).

16. Electric motor (1), in particular external rotor motor, with a stator (14) and with a rotor,
**characterised by** a rotor according to one of Claims 1 to 15.

17. Electric motor according to Claim 16,
**characterised in that** the rotor is mounted with its shaft shank (5a) inside the stator (14) via a/the heavily loaded supporting bearing (12) and a/the less heavily loaded guide bearing (11).

18. Electric motor according to Claim 16 or 17,
**characterised in that** the rotor is mounted in a bearing supporting tube (13) of the stator (14), in which a bearing seat (15) for the supporting bearing (12) and a bearing seat (16) for the guide bearing (11) is formed, the bearing supporting tube (13) having a greater inside diameter in the region of the bearing seat (15) for the supporting bearing (12) than in the region of the bearing seat (16) for the guide bearing (11).

## Revendications

1. Rotor pour un moteur électrique (1), en particulier pour un moteur à induit extérieur, avec un corps de base (2) qui présente une paroi périphérique (3) dotée d'une forme de base cylindrique et une paroi de recouvrement (4) frontale reliée à la paroi périphérique (3), et avec un arbre de rotor (5) qui est relié d'un seul tenant de manière centrale à la paroi de recouvrement (4) et pénètre avec une tige d'arbre (5a) axialement dans une chambre de rotor (6) entourée par la paroi périphérique (3),
**caractérisé en ce que** le corps de base (2) et l'arbre de rotor (5) sont fabriqués en un alliage d'aluminium, dans lequel l'arbre de rotor (5) est réalisé au moins en partie dans une zone partant de la paroi de recouvrement (4) sous la forme d'un arbre creux.

2. Rotor selon la revendication 1,
**caractérisé en ce qu'**un espace intérieur (7) de l'arbre de rotor (5) réalisé au moins en partie sous la forme d'un arbre creux se rétrécit en forme de cône ou d'entonnoir à partir de la paroi de recouvrement (4) dans le sens axial (X-X).

3. Rotor selon la revendication 1 ou 2,
**caractérisé en ce que** le contour extérieur de l'arbre de rotor (5) se rétrécit à partir de la paroi de recouvrement (4) au moins par endroits en forme de cône, d'entonnoir ou brusquement dans le sens axial (X-X).

4. Rotor selon l'une quelconque des revendications 1 à 3,
**caractérisé en ce que** la tige d'arbre (5a) est réalisée par section (5d) sous la forme d'un corps plein.

5. Rotor selon l'une quelconque des revendications 1 à 4,
**caractérisé en ce que** la tige d'arbre (5a) est réalisée sur son extrémité libre (5c) sous la forme d'un corps creux.

6. Rotor selon l'une quelconque des revendications 1 à 5,
**caractérisé en ce que** des pales de ventilateur sont disposées et en particulier sont formées d'un seul tenant, sur la paroi périphérie (3) côté extérieur.

7. Rotor selon l'une quelconque des revendications 1 à 6,
**caractérisé en ce que** la paroi périphérique (3) et la paroi de recouvrement (4) sont reliées entre elles, vu en coupe longitudinale, par une section de transition de paroi (5e) extérieure, dont la forme de base est arrondie, courbée de manière convexe, en particulier courbée de manière hyperbolique, parabolique, elliptique ou circulaire en forme d'anneau.

8. Rotor selon l'une quelconque des revendications 1 à 7,
**caractérisé en ce que** la paroi de recouvrement (4) et la tige de l'arbre (5a) sont reliées entre elles, vu en coupe longitudinale, par une section de transition de paroi (5f) intérieure, dont la forme de base est arrondie, courbée de manière convexe, en particulier courbée de manière hyperbolique, parabolique, elliptique ou circulaire en forme d'anneau.

9. Rotor selon l'une quelconque des revendications 1 à 8,
**caractérisé en ce qu'**une longueur axiale (LS) de la tige d'arbre (5a) est inférieure à une longueur axiale (LW) de la paroi périphérique (3).

10. Rotor selon l'une quelconque des revendications 1 à 9,
**caractérisé en ce que** des nervures de renforcement (8, 9) orientées radialement vers l'extérieur sont disposées sur le côté supérieur et/ou le côté inférieur de la paroi de recouvrement à la manière de rayons.

11. Rotor selon l'une quelconque des revendications 1 à 10,
**caractérisé en ce qu'**une nervure annulaire (10a) dépassant axialement (X-X) et s'étendant sur la périphérie est disposée dans une zone de bord de la paroi de recouvrement (4).

12. Rotor selon l'une quelconque des revendications 1 à 11,
**caractérisé en ce que** des nervures de renforcement (10b) se terminant radialement en biais sur la paroi périphérique (3) et reliant la paroi périphérique (3) à la paroi de recouvrement (4) sont disposées dans une zone de bord de la paroi de recouvrement (4).

13. Rotor selon l'une quelconque des revendications 1 à 12,
**caractérisé en ce que** la tige d'arbre (5a) présente à proximité de son extrémité libre (5c) un siège de palier (5g) pour un palier de guidage (11).

14. Rotor selon l'une quelconque des revendications 1 à 13,
**caractérisé en ce que** la tige d'arbre (5a) présente dans une zone médiane un siège de palier (5h) pour un palier porteur (12).

15. Rotor selon les revendications 13 et 14,
**caractérisé en ce que** l'arbre de palier (5a) présente dans la zone du siège de palier (5h) pour le palier porteur (12) un plus grand diamètre (DT) que le diamètre (DF) dans la zone du siège de palier (5g) pour le palier de guidage (11).

16. Moteur électrique (1), en particulier moteur à induit extérieur avec un stator (14) et un rotor, **caractérisé par** un rotor selon l'une quelconque des revendications 1 à 15.

17. Moteur électrique selon la revendication 16,
**caractérisé en ce que** le rotor est logé dans le stator (14) avec sa tige d'arbre (5a) par un/le palier porteur (12) sollicité plus fortement et un/le palier de guidage (11) sollicité moins fortement.

18. Moteur électrique selon la revendication 16 ou 17,
**caractérisé en ce que** le rotor est logé dans un tube porteur de palier (13) du stator (14), dans lequel un siège de palier (15) pour le palier porteur (12) et un siège de palier (16) pour le palier de guidage (11) sont réalisés, dans lequel le tube porteur de palier (13) présente dans la zone du siège de palier (15) pour le palier porteur (12) un plus grand diamètre intérieur que dans la zone du siège de palier (16) pour le palier de guidage (11).
